# EUROPEAN PATENT APPLICATION

(11) **EP 3 876 099 A1**
(43) Date of publication of application: **08.09.2021**
(21) Application number: 21159035.1
(22) Date of filing: 24.02.2021
(51) Int. Cl.: G06F 9/50, G06F 9/48

(54) **RESOURCE ALLOCATION IN A PARALLEL PROCESSING SYSTEM**

(30) Priority: 03.03.2020 GB 202003051
(71) Applicant: Imagination Technologies Limited, Kings Langley Hertfordshire WD4 8LZ (GB)
(72) Inventor: HERATH, Isuru, Kings Langley, Hertfordshire WD4 8LZ (GB); BROADHURST, Richard, Kings Langley, Hertfordshire WD4 8LZ (GB)
(74) Representative: CMS Cameron McKenna Nabarro Olswang LLP

(57) **Abstract**

A method of resource allocation in a parallel processing system is described. The method comprises receiving a request to allocate resources to a task, where the request identifies an amount of resources required to execute a next chunk of the task only, and when available, allocating to the task, the amount of resources required to execute the next chunk of the task.

To be accompanied, when published, by Figure 1 of the accompanying drawings.

## Description

### Background

A graphics processing unit (GPU) comprises a highly parallel structure which is designed to efficiently process large amounts of data in parallel. GPUs are typically used for computer graphics (e.g. to render images on a screen), however they may also be used for other operations which benefit from the parallelism they provide.

In a parallel processing system (e.g. a system comprising a GPU and memory), when a task is ready to be executed, the required resources (e.g. registers and/or memory) are allocated to that task. Having a large number of tasks that are ready to be executed reduces the idling of functional units.

The embodiments described below are provided by way of example only and are not limiting of implementations which solve any or all of the disadvantages of known methods of resource allocation.

### Summary

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

A method of resource allocation in a parallel processing system is described. The method comprises receiving a request to allocate resources to a task, where the request identifies an amount of resources required to execute a next chunk of the task only, and when available, allocating to the task, the amount of resources required to execute the next chunk of the task.

A first aspect provides a method of allocating resource to a task in a parallel processing system, the method comprising: receiving a request to allocate resources to a task, the request identifying an amount of resources required to execute a next chunk of the task only and wherein the task is partitioned into a plurality of chunks; determining whether the amount of resources required to execute the next chunk of the task is available; in response to determining that the amount of resources required to execute the next chunk of the task is not available, pausing the task; and in response to determining that the amount of resources required to execute the next chunk of the task is available, allocating the resources to the task.

A second aspect provides a method of allocating resource to a task in a parallel processing system, the method comprising: receiving a request to allocate resources to a task, the request identifying both an amount of resources required to execute a next chunk of the task only and an amount of resources required to execute the entire task and wherein the task is partitioned into a plurality of chunks; determining whether the amount of resources required to execute the entire task has already been allocated to the task; and in response to determining that the amount of resources required to execute the entire task has not already been allocated to the task: determining whether the amount of resources required to execute the entire task is available; and in response to determining that the amount of resources required to execute the entire task is available, allocating the resources to the task; and in response to determining that the amount of resources required to execute the entire task is not available: determining whether the amount of resources required to execute the next chunk of the task is available; and in response to determining that the amount of resources required to execute the next chunk of the task is not available, pausing the task; and in response to determining that the amount of resources required to execute the next chunk of the task is available, allocating the resources to the task.

A third aspect provides a method of allocating resource to a task in a parallel processing system, the method comprising: receiving a request to allocate resources to a task, the request identifying both an amount of resources required to execute a next chunk of the task only and an amount of resources required to execute the entire task and wherein the task is partitioned into a plurality of chunks; and in a first mode of operation: determining whether the amount of resources required to execute the entire task has already been allocated to the task; and in response to determining that the amount of resources required to execute the entire task has not already been allocated to the task: determining whether the amount of resources required to execute the entire task is available; and in response to determining that the amount of resources required to execute the entire task is available, allocating the resources to the task; and in response to determining that the amount of resources required to execute the entire task is not available: determining whether the amount of resources required to execute the next chunk of the task is available; and in response to determining that the amount of resources required to execute the next chunk of the task is not available, pausing the task; and in response to determining that the amount of resources required to execute the next chunk of the task is available, allocating the resources to the task; and in a second mode of operation: determining whether the amount of resources required to execute the entire task has already been allocated to the task; in response to determining that the amount of resources required to execute the entire task has already been allocated to the task, reducing the allocation of resources to the task to the amount of resources required to execute the next chunk of the task; and in response to determining that the amount of resources required to execute the entire task has not already been allocated to the task: determining whether the amount of resources required to execute the next chunk of the task is available; and in response to determining that the amount of resources required to execute the next chunk of the task is not available, pausing the task; and in response to determining that the amount of resources required to execute the next chunk of the task is available, allocating the resources to the task.

A fourth aspect provides a method of partitioning a program into a plurality of chunks, the method comprising: analysing, in a compiler, resource requirements of the program over time against one or more thresholds; inserting an initial instruction into the program; and inserting an instruction into the program at a position prior to where the resource requirements increase above a threshold for a first time in the program execution sequence.

The method may further comprise inserting an instruction into the program at a position following where the resource requirements fall below a threshold for a last time in the program execution sequence.

The method may further comprise inserting an instruction into the program at a position prior to where the resource requirements increase above a threshold for any subsequent time in the program execution sequence; and inserting an instruction into the program at a position following where the resource requirements fall below a threshold for any prior time in the program execution sequence.

The inserted instruction, when executed, may trigger sending of a request indicating an amount of resources required to execute a next chunk of the program. The request may additionally indicate an amount of resources required to execute the entire program sequence.

A fifth aspect provides a method of partitioning a program into a plurality of chunks, the method comprising: receiving, in an instruction sequencer, metadata associated with the program, the metadata identifying one or more instructions in the program and resource requirements associated with those instructions; monitoring execution of the program; and in response to determining that execution of the program has reached an instruction where the resource requirements increase above a threshold for a first time in the program execution sequence, identifying a chunk boundary.

A sixth aspect provides a parallel processing system comprising: one or more resources for use when executing a task, wherein the task is partitioned into a plurality of chunks; a task scheduler arranged to receive a request to allocate resources to a task, the request identifying an amount of resources required to execute a next chunk of the task only, determine whether the amount of resources required to execute the next chunk of the task is available, in response to determining that the amount of resources required to execute the next chunk of the task is not available, pause the task, and in response to determining that the amount of resources required to execute the next chunk of the task is available, allocate the resources to the task; and one or more execution modules arranged to execute each chunk of the task.

A seventh aspect provides a parallel processing system comprising: one or more resources for use when executing a task, wherein the task is partitioned into a plurality of chunks; a task scheduler arranged to receive a request to allocate resources to a task, the request identifying both an amount of resources required to execute a next chunk of the task only and an amount of resources required to execute the entire task, determine whether the amount of resources required to execute the entire task has already been allocated to the task, and in response to determining that the amount of resources required to execute the entire task has not already been allocated to the task: determine whether the amount of resources required to execute the entire task is available; and in response to determining that the amount of resources required to execute the entire task is available, allocate the resources to the task; and in response to determining that the amount of resources required to execute the entire task is not available: determine whether the amount of resources required to execute the next chunk of the task is available; and in response to determining that the amount of resources required to execute the next chunk of the task is not available, pause the task, and in response to determining that the amount of resources required to execute the next chunk of the task is available, allocate the resources to the task.

An eighth aspect provides a parallel processing system comprising: one or more resources for use when executing a task, wherein the task is partitioned into a plurality of chunks; a task scheduler arranged to receive a request to allocate resources to a task, the request identifying both an amount of resources required to execute a next chunk of the task only and an amount of resources required to execute the entire task, and further arranged in a first mode of operation: to determine whether the amount of resources required to execute the entire task has already been allocated to the task and in response to determining that the amount of resources required to execute the entire task has not already been allocated to the task: determine whether the amount of resources required to execute the entire task is available; and in response to determining that the amount of resources required to execute the entire task is available, allocate the resources to the task; and in response to determining that the amount of resources required to execute the entire task is not available: determine whether the amount of resources required to execute the next chunk of the task is available; and in response to determining that the amount of resources required to execute the next chunk of the task is not available, pause the task; and in response to determining that the amount of resources required to execute the next chunk of the task is available, allocate the resources to the task; and further arranged in a second mode of operation: to determine whether the amount of resources required to execute the entire task has already been allocated to the task; in response to determining that the amount of resources required to execute the entire task has already been allocated to the task, reduce the allocation of resources to the task to the amount of resources required to execute the next chunk of the task; and in response to determining that the amount of resources required to execute the entire task has not already been allocated to the task: determine whether the amount of resources required to execute the next chunk of the task is available; and in response to determining that the amount of resources required to execute the next chunk of the task is not available, pause the task; and in response to determining that the amount of resources required to execute the next chunk of the task is available, allocate the resources to the task.

The task scheduler may be a task scheduler in a GPU.

The task may be associated with a shader.

The one or more resources may comprise a plurality of registers.

The processor described herein may be embodied in hardware on an integrated circuit. There may be provided a method of manufacturing, at an integrated circuit manufacturing system, a processor as described herein. There may be provided an integrated circuit definition dataset that, when processed in an integrated circuit manufacturing system, configures the system to manufacture a processor as described herein. There may be provided a non-transitory computer readable storage medium having stored thereon a computer readable description of an integrated circuit that, when processed, causes a layout processing system to generate a circuit layout description used in an integrated circuit manufacturing system to manufacture a processor as described herein.

There may be provided an integrated circuit manufacturing system comprising: a non-transitory computer readable storage medium having stored thereon a computer readable integrated circuit description that describes a processor as described herein; a layout processing system configured to process the integrated circuit description so as to generate a circuit layout description of an integrated circuit embodying the processor; and an integrated circuit generation system configured to manufacture the processor according to the circuit layout description.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

### Brief Description of the Drawings

Examples will now be described in detail with reference to the accompanying drawings in which:
FIG. 1 is a flow diagram of a first example method of resource allocation;
FIG. 2 shows an example implementation of the method of FIG. 1;
FIG. 3 is a flow diagram of an example method of partitioning a program;
FIGs. 4 and 5 show various example implementations of the method of FIG. 3;
FIG. 6 is a flow diagram of a second example method of resource allocation;
FIG. 7 is a flow diagram of a third example method of resource allocation;
FIG. 8 shows another example implementation of the method of FIG. 1;
FIG. 9 shows an example implementation of the method of FIG. 7;
FIG. 10 is a flow diagram of a fourth example method of resource allocation;
FIG. 11 is a schematic diagram of a processing system;
FIG. 12 shows a computer system in which the methods described herein may be implemented; and
FIG. 13 shows an integrated circuit manufacturing system for generating an integrated circuit embodying a processing system as described herein.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### Detailed Description

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only.

As described above, when a task is ready to be executed in a parallel processing system (e.g. a system comprising a GPU and memory), the required resources (e.g. registers and/or memory and/or other hardware resources, such as a coprocessor) are allocated to that task. Having a large number of tasks that are ready to be executed reduces the idling of functional units. However, where programs (e.g. shaders) have larger resource requirements, the number of tasks that can be in the 'ready' state may be limited (e.g. because there are no resources available to allocate to additional tasks) and this may result in pipeline starvation and hence reduced throughput.

Described herein are various methods and apparatus for resource allocation (e.g. register allocation, memory allocation or allocation of other hardware resources, such as a coprocessor) which enable more tasks to be in a 'ready' state at any time. As described in more detail below, the methods comprise partitioning a task into chunks based on changes in resource requirements such that a task in the 'ready' state is allocated at least the resources that are required to execute the next chunk of the task. At the end of the chunk, resources that are not required by the following chunk of the task may be released and hence become available to be allocated to a different task. In situations where the immediately following chunk requires additional resources (i.e. resources in excess of those that have already been allocated to the task) these are requested and if available are allocated to the task, such that it can remain in the 'ready' state. If, however, the additional resources that are requested are not available, the task is stalled until more resources become available and the additional resources required for the following chunk can be allocated to the task.

The methods described herein may be used where a task has a varying resource requirement over the execution time of the task, such that it can be partitioned into chunks based on changes in resource requirements. For tasks which do not have such a varying resource requirement over time, the allocation of resources to the task may be performed using known methods (e.g. by allocating the resources required to perform the entire task to the task from the outset). The methods described herein may be used alongside such known methods (e.g. as shown in some of the examples described below).

The methods described herein may be implemented in any system running multiple tasks in parallel, whether this parallel operation is achieved using time-slicing (e.g. fine-grained interleaving of tasks such as by cycling between a small number of tasks in a pool of tasks on a cycle-by-cycle basis) or by running tasks in parallel hardware. In various examples, the methods may be implemented a system comprising a GPU and memory and may be implemented within the GPU. In other examples, the methods may be implemented within a CPU.

By using the methods and apparatus described herein for those tasks that can be partitioned into chunks, the resources required to perform the entirety of the task may not be allocated prior to the start of execution of the task, but instead the resources may be partially allocated. Furthermore, some of the resources may be released during execution of the task such that they do not remain allocated to the task for the entirety of the time taken to execute the task. This partial allocation and/or partial release of resources improves the efficiency of the use of the resources and may increase the number of tasks that can be in the 'ready' state at any time. This, in turn, may increase the throughput of the parallel processing system. Use of the methods and apparatus described herein may in addition, or instead, enable the parallel processing system to be designed with fewer resources (without impacting throughput) and hence save both power and area.

The term 'ready' state is used herein in relation to a task to refer to those tasks where all the task dependencies have been met and the resources required to execute at least a next chunk of the task have been allocated to the task.

The term 'task' is used herein to refer to a group of data-items and the work that is to be performed upon those data-items. For example, in a Single Instruction Multiple Data (SIMD) processing system a task may comprise or be associated with a program or reference to a program (e.g. the same sequence of ALU instructions or reference thereto) in addition to a set of data that is to be processed according to the program, where this set of data may comprise one or more data elements (or data-items, e.g. a plurality of pixels or vertices).

The term 'program instance' is used herein to refer to individual instances that take a path through the code. A program instance therefore refers to a single data-item and a reference (e.g. pointer) to a program which will be executed on the data-item. A task therefore could be considered to comprise a plurality of program instances (e.g. up to 32 program instances), though in practice only a single instance of the common program (or reference) is required per task. There is therefore a hierarchy of terminology, with tasks comprising one or more program instances.

The term 'chunk' is used herein in relation to tasks, such that a task comprises one or more chunks. A chunk is different to a program instance in that a chunk relates to a portion of a program that the task will execute (and not a subset of the group of data-items).

A program typically performs operations on values stored in registers and each program instance requires its own copy of each register value. There may be many registers used (or referenced) by each program and many tasks running concurrently on a processing system and hence the methods described herein may be used to provide a way of flexibly allocating a relatively large number of registers.

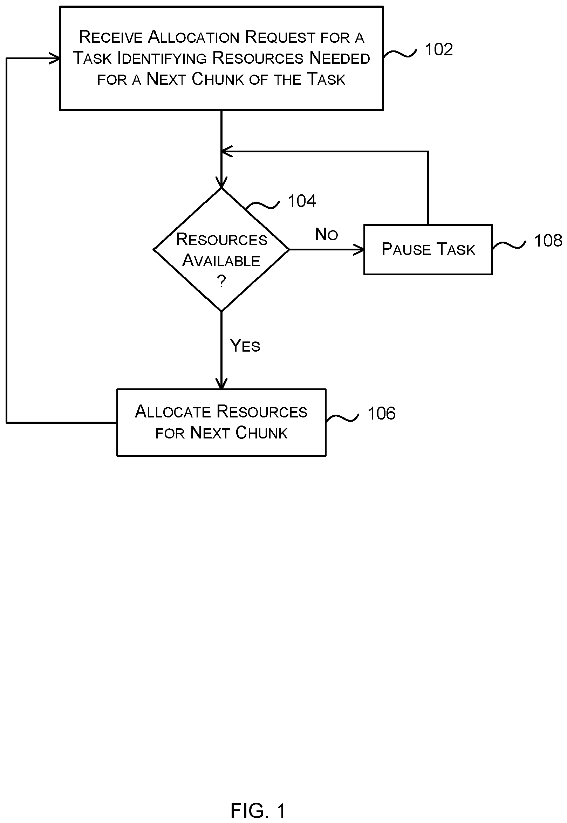

A first method of resource allocation can be described with reference to FIG. 1. The method comprises receiving a request from a task for allocation of resources, where the task has been partitioned into a plurality of chunks and this request identifies the resources required for execution of a next chunk of the task (block 102). As detailed above, a chunk of a task is a proper subset of the task (i.e. it is not the entire task but a portion thereof) and in this first method, a task is partitioned into chunks at points where the resource requirements increase over a pre-defined threshold. If there is only a single threshold, the task is partitioned into two chunks; however, in various examples there may be more than one threshold and the task may be partitioned into two or more chunks. The partitioning of tasks into chunks, which may be performed at the time the program associated with the task is compiled or in a process subsequent to compilation, is described in more detail below.

In response to receiving the request (in block 102), the resources required for execution of the next chunk are allocated if they are available ('Yes' in block 104 followed by block 106). This means that the next chunk of the task is now ready for execution and the task can be placed into (or remain in) the 'ready' state. If the resources are not available ('No' in block 104), then the task is paused (block 108) until the resources for the next chunk are available and can be allocated (in block 106). When a task is paused (or stalled), it is not put into a 'ready' state and if the task is already in the 'ready' state then the task is removed from that state and placed into another, non-ready, state which may be referred to as a waiting state.

As only the resources required for the next chunk are allocated (in block 106), then following the execution of that particular chunk, e.g. chunk n (where the task is divided into N tasks, n=[0,...,N-1] and N>1), there may not be sufficient resources to execute the immediately following chunk of the task, e.g. chunk n+1. Consequently, a further request is received that requests allocation of the resources for the next chunk to be executed (e.g. chunk n+1). The method is repeated (as indicated by the arrow from block 106 to block 102 in FIG. 1) until the resources have been allocated for the last chunk (e.g. for chunk N-1) in the task.

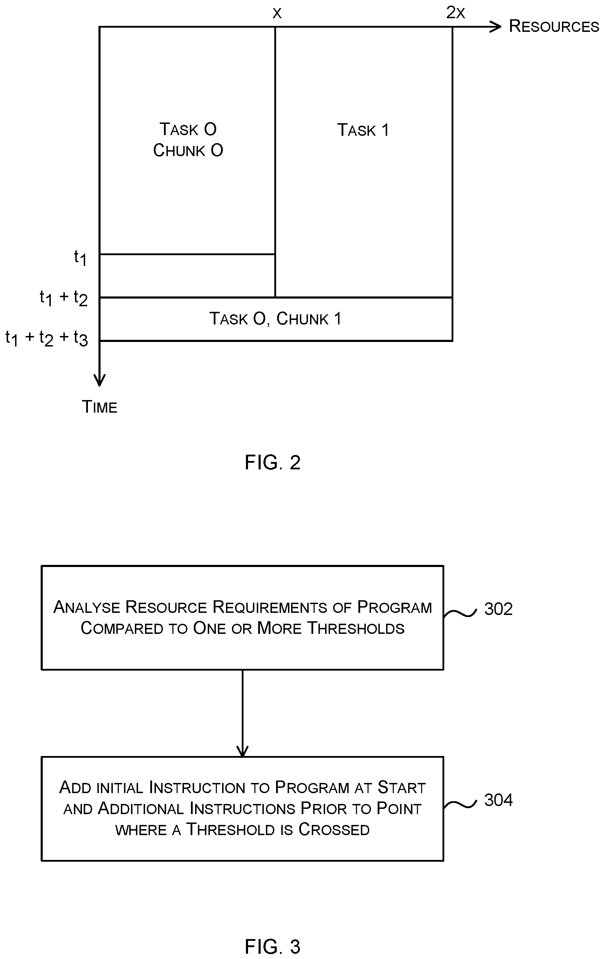

An example implementation of this first method is shown in FIG. 2. Whilst for the purposes of explanation this example shows only two tasks, Task 0 and Task 1, it will be appreciated that in reality there are likely to be a large number of tasks that are being handled at any time. As shown in FIG. 2, requests are received from two tasks, task 0 and task 1. Task 0 is partitioned into two chunks (N=2) and the request that is received (in block 102) is a request for allocation of the amount of resources, x, that are required to execute the first chunk of the task (chunk 0 of task 0) only. Task 1 is not partitioned into chunks and hence the request is for the full allocation of resources for the task, which is also an amount x. It is assumed for the purposes of this example that the available resources correspond to 2x and so the resources can be allocated equally to task 0 and task 1 (x to each) and both tasks can execute in parallel. When the first chunk of task 0 finishes execution (at time t=t₁), a further request is received from task 0, requesting resources for the next chunk (chunk 1 of task 0) and this second chunk requires a larger amount of resources, 2x. As there are insufficient resources available for this next chunk, task 0 is stalled. When task 1 completes (at time t=t₁+t₂), the resources used by task 1 are released and the additional amount of resources, x, can be allocated to task 0 to enable chunk 1 of task 0 to be executed. This enables both task 0 and task 1 to be completed in time t₁+t₂+t₃. In contrast, had all the resources (2x) been allocated to task 0 initially, task 1 would have been stalled until time t₁+t₃ when task 0 completed and task 1 would not have completed until time 2t₁+t₂+t₃.

As shown in the example of FIG. 2, by allocating only the resources required for the next chunk to the task (e.g. to task 0) and not the resources required for the entirety of the task, more tasks can execute in parallel and the overall throughput can be increased because the resources, including the execution pipelines, are used more efficiently.

In order that this method can be implemented, a task (e.g. at least one task) has to be partitioned into chunks based on an increase in resource requirements as the task progresses. A task may be partitioned into chunks if the associated program (e.g. a shader) can itself be partitioned into chunks based on changes in resource requirements. An example method of partitioning of the program (e.g. a shader) into a plurality of chunks can be described with reference to FIGs. 3-5.

FIG. 3 is a flow diagram of an example method of partitioning a program into chunks, which has the effect of partitioning all tasks that are associated with that program into chunks. As detailed above, a task is associated with a program if the task comprises executing the program on a group of data-items. The method may be performed by a compiler when the program is compiled, such that all tasks associated with the same program are partitioned in the same way.

In various examples, the tasks referred to herein may be tasks associated with shaders that are executed on a GPU. In further examples, the tasks may be associated with other programs (i.e. which are not shaders).

As shown in FIG. 3, the method comprises analysing the resource requirements of the program against one or more thresholds (block 302) and adding an initial instruction to the program at (or near) the start of the program followed by an additional instruction prior to the point where the resource requirements first exceed each threshold (block 304), e.g. prior to where the resource requirements increase, for the first time in the program's execution flow, from below a threshold to above the threshold. It is these newly added instructions that divide the program into chunks, with all instructions between the first added instruction and the second added instruction comprising the first chunk (chunk 0), all instructions between the second newly added instruction and the third newly added instruction (or the end of the program, where there are only two newly added instructions) comprising the second chunk (chunk 1), etc. When the program is executed, each newly added instruction causes a request for resource allocation to be sent to the scheduler (e.g. as received in block 102 of FIG. 1) as described above.

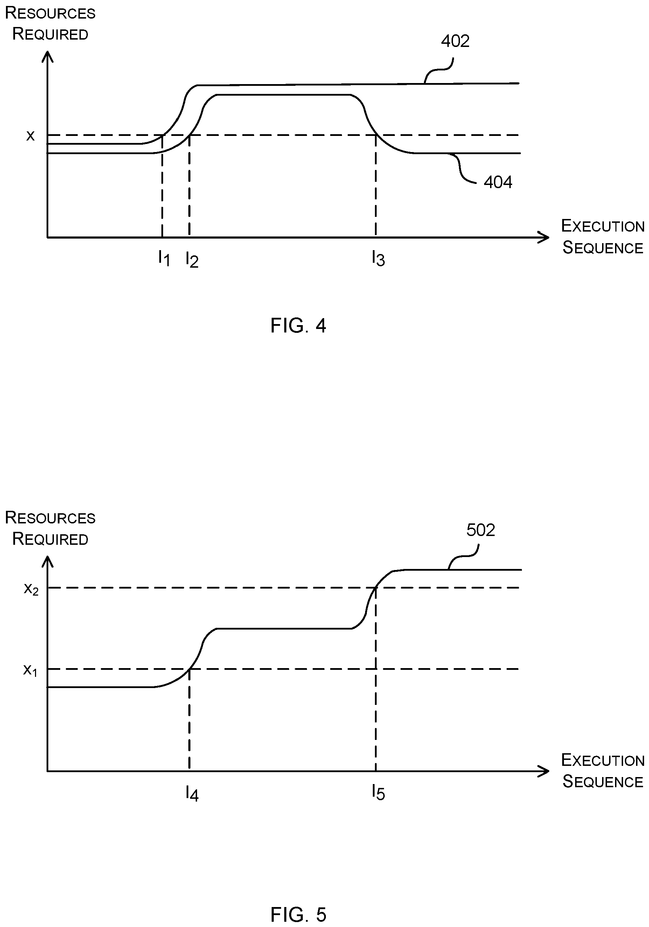

FIGs. 4 and 5 shows graphs of example resource profiles of programs. FIG. 4 shows two example profiles 402, 404 and only one threshold (set at x₁). The first example program, which has the upper profile 402, is divided into two chunks by the addition of a new instruction prior to the point (at l₁) where the resource requirements exceed that threshold. The point at which a program moves from one chunk to the next chunk (e.g. where the new instruction is added) may be referred to as a chunk boundary. The second example program, which has the lower profile 404, is also divided into two chunks at a point prior to where the resource requirements cross the threshold (at l₂). With this second example program, the resource requirements subsequently fall below the threshold and with this first method (as shown in FIG. 1), this does not have any effect as the program is only partitioned in advance of positions in the program execution sequence where resource requirements increase above a threshold for the first time. FIG. 5 shows a third example profile 502 and two thresholds (set at x₁ and x₂) and the program is partitioned into three chunks by the insertion of new instructions (in block 304) at the start and prior to each of positions l₄ and l₅ in the execution sequence.

It will be appreciated that the graphs of FIGs. 4 and 5 are provided by way of explanation only and relate principally to implementations where the only a single type of resource is allocated using the method of FIG. 1, e.g. register allocation. Where the method is used to simultaneously allocate more than one type of resource (e.g. registers and memory), there may be multiple profiles for the same program (e.g. one for registers and one for memory) and the thresholds may be defined in terms of both types (e.g. set at a combination of xᵢ for registers and yᵢ for memory) or there may be multiple thresholds, with a subset of the thresholds relating to each type of resource.

The positions of the thresholds (and hence the granularity of the partitioning) may be set dependent upon the architecture of the hardware upon which the tasks are executed. For example, where the resources which are allocated are registers, the thresholds may be positioned at a granularity that corresponds to the number of banks in the memory used to implement the registers or may be positioned at a more granular level (e.g. every two registers). In various examples a program may be compiled more than once and in different ways, e.g. with different thresholds dependent upon the hardware upon which the tasks will be executed. In this way, different compiled versions of the program may be partitioned in a different way.

The method of FIG. 3 may be implemented when the program is compiled. In another example, however, the analysis of the program may be performed after compilation and may be based on a table of instruction counts and resource requirements (e.g. instruction 0, resource requirement = 10, instruction 22, resource requirement = 22, etc). This table may be provided as metadata along with the program and may be generated during compilation or at another time. Where this table is used, an instruction fetch unit (which may also be referred to as an instruction sequencer) may count instructions and/or track the program counter and inform the scheduler when a threshold is crossed and hence a chunk boundary occurs.

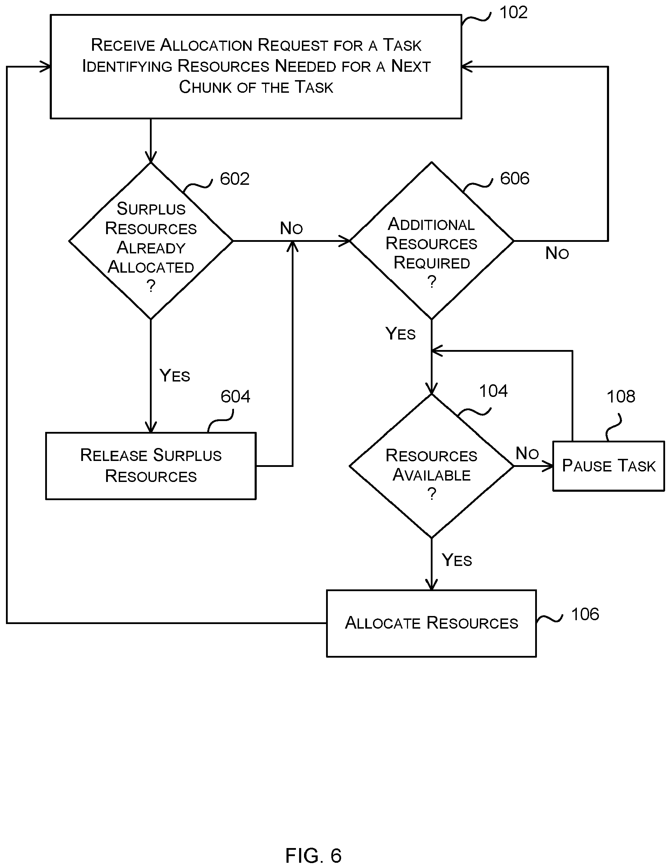

The first method of resource allocation described above involved partial allocation of resources to a task based on the resource requirements for a next chunk. In addition to, or instead of, performing partial allocation of resources, partial release of resources may be performed, i.e. releasing, following the execution of a chunk of a task, those resources that are not required for the execution of the next chunk of the task. A second method of resource allocation, which can be described with reference to FIG. 6, involves both partial allocation and partial release of resources.

The second method starts in the same way as the first method (shown in FIG. 1) with the receipt of a request from a task for allocation of resources, where this request identifies the resources required for execution of a next chunk of the task (block 102). In response to receiving the request (in block 102), the resources required for execution of the next chunk are allocated if they are available and any surplus resources are released (blocks 602-606 and 104-108). The surplus resources that are released will be dependent upon the particular requirements for the next chunk and the amount that is released need not match any combination of the previously allocated blocks of resources.

FIG. 6 shows an example of a more detailed implementation of this partial allocation and release of resources. As shown in FIG. 6, following receipt of the request (in block 102), it is determined whether there are any surplus resources (block 602), i.e. resources which were allocated to the task for execution of the previous chunk (e.g. chunk n-1) but are not required for execution of the next chunk (e.g. chunk n). If there are any surplus resources ('Yes' in block 602), these are released (block 604) and so may then be allocated to another task. The method then determines whether any additional resources are required for execution of the next chunk (block 606) and if so, these are allocated in the same way as the first method (blocks 104-108). Whilst FIG. 3 shows the release of surplus resources (in block 604) prior to allocation of additional resources (in block 106), it will be appreciated that the two operations may be implemented in the other order or substantially in parallel. As with the first method, the second method is repeated for each chunk in the task (as indicated by the arrows from blocks 606 and 106 back to block 102).

Where both partial allocation and partial release is implemented, as in the second method of resource allocation, the partitioning of the program (and hence the task) is implemented in a slightly different manner to that described above. Referring back to the method shown in FIG. 3, the second method of resource allocation (of FIG. 6) requires that, following the initial instruction, additional instructions are added both prior to the points where the resource requirements exceed a threshold and after points where the resource requirements fall below a threshold. As before, when the program is executed, each newly added instruction causes a request for resource allocation to be sent to the scheduler (e.g. as received in block 102 of FIG. 3). In scenarios where the resource requirements oscillate around a threshold, additional criteria may be specified to limit the number of chunks and/or minimum chunk size and hence limit the number and/or spacing of requests for resource allocation that are sent to the scheduler.

Referring to the lower example resource profile 404 shown in FIG. 4, where both partial allocation and partial release is used, the program may be divided into three chunks by the addition of a new instruction prior to the point (at l₁) where the resource requirements exceed that threshold and another new instruction after the point (at l₃) where the resource requirements subsequently fall below that threshold.

It will be appreciated that even where a program is partitioned by the addition of instructions whenever the resource requirements cross a threshold (either from below or above), the method of resource allocation may be set to implement only partial allocation (as in FIG. 3 with the omission of blocks 602 and 604 and addition of an arrow from block 102 to block 606) or may be set to implement both partial allocation and partial release (as in FIG. 3).

In other examples, a method of resource allocation may be set to implement only partial release. In such examples, a program may be divided into chunks by the addition of an initial instruction (at, or near, the start of the program) that triggers the request for the maximum amount of resources required to execute the entire program and then additional instructions are added only at points after the resource requirements fall below a threshold for the last time in the program and the method of FIG. 3 may be modified to omit blocks 606 and 104-108 and add an arrow from block 604 to block 102.

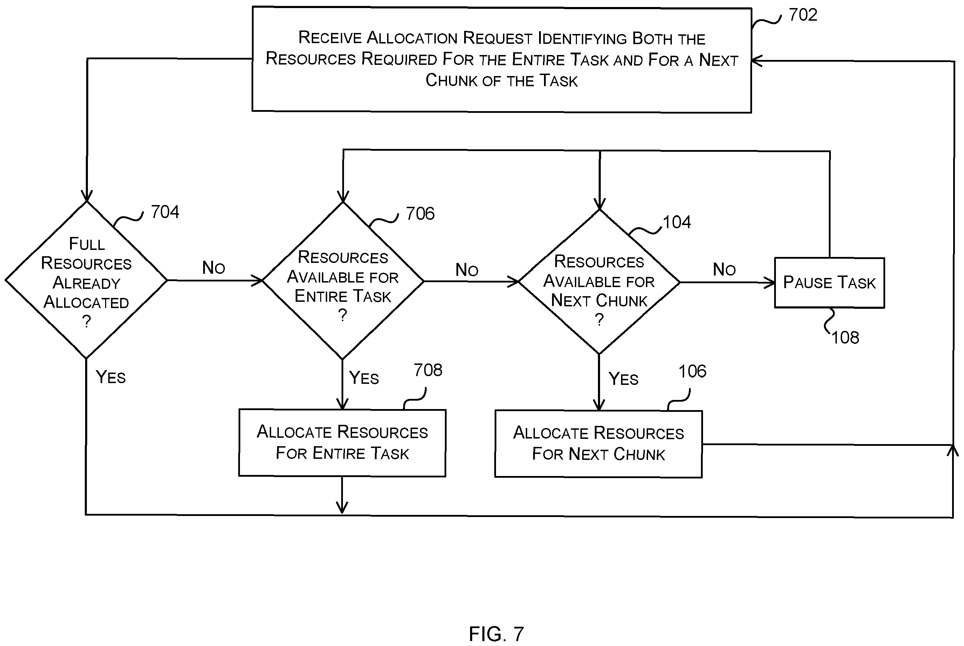

In the first and second example methods described above, the requests that are received by the scheduler (in block 102) and which are triggered by the instructions that are added by the compiler, request allocation of the resources that are required for the next chunk of the task only. In a third example method of resource allocation, shown in FIG. 7, the request additionally identifies the resources required for execution of the entire task and this enables a hybrid approach in which the resources for the entire task are allocated if available, but if they are not, and the resources for only the next chunk are available, the resources for only the next chunk are allocated.

As shown in FIG. 7, a request for resource allocation to a task is received (in block 702), where this request includes both the resource requirements for the next chunk of the task and the resource requirements for the entire task. If the resources for the entire task have not already been allocated ('No' in block 704), e.g. in a previous iteration of this method, then it is determined whether the resources that are required for the entire task are available (block 706) and where this amount of resources is available ('Yes' in block 706), the resources required for the execution of the entire task are allocated (block 708). If the resources required for the entire task are not available ('No' in block 706), it is determined whether the resources required for the next chunk only are available (block 104) and if they are available ('Yes' in block 104), the resources are allocated to the task (block 106). If, however, there are insufficient resources for the next chunk ('No' in block 104), then (as described above) the task is paused (block 108) until sufficient resources are available for at least the next task. As before, the method is repeated for each allocation request that is received; however, where the full resources for the task have already been allocated ('Yes' in block 704), no further allocation of resources is performed.

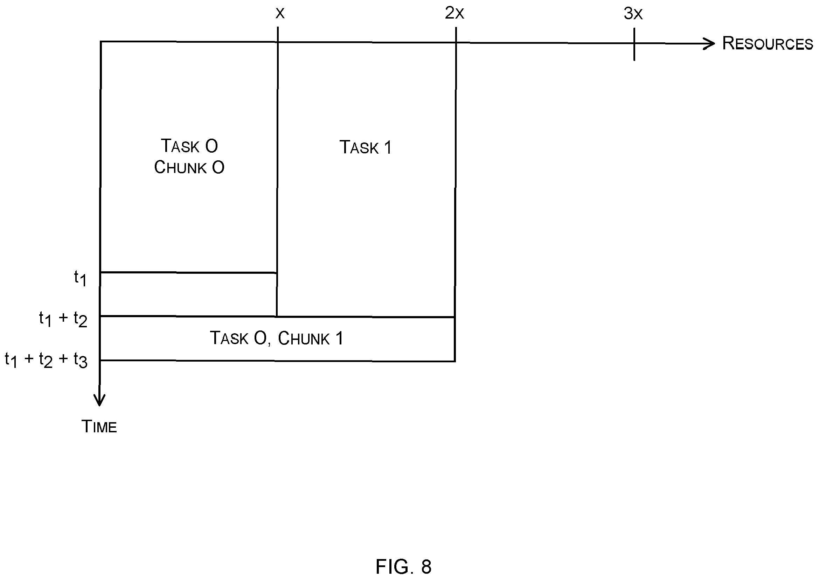

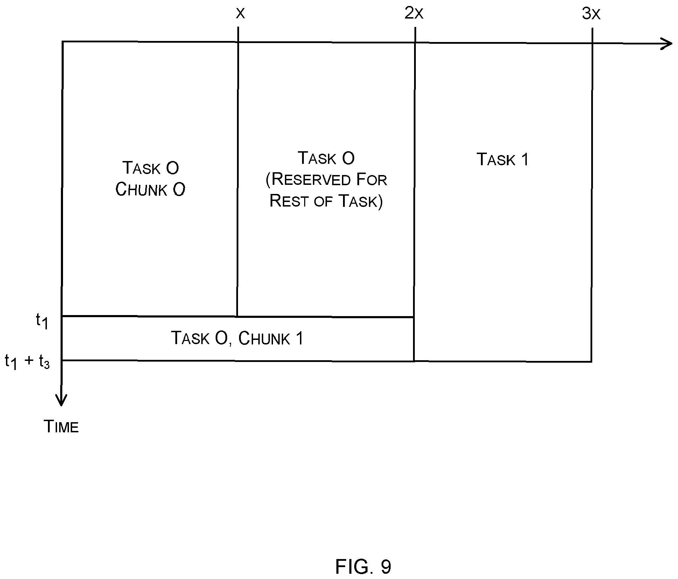

This hybrid approach may reduce delays that result from the additional resource requests (triggered by the additional instructions inserted into the program) in the event that there are no competing resource requests and may also reduce the need to copy data between registers / memory locations in the event that the task requires its resource allocation to be in a contiguous block. This can be described with reference to FIGs. 8 and 9 which are schematic diagrams showing resource allocation to tasks.

In FIG. 8, the method of FIGs. 1 or 6 are used, such that only the resources for the next chunk is allocated and unlike the corresponding example in FIG. 2, there are 3x of resources available instead of 2x. Initially task 0 is allocated the resources required for the first chunk (chunk 0), task 1 is allocated the resources it requires and there are unallocated resources. At the point that chunk 0 of task 0 completes (at time t₁), a further request is received from task 0. This request is for the allocation of the resources required for the next chunk (chunk 1). At this time, whilst the requested amount of resources for chunk 1 of task 0, 2x, is available, it is not available in a contiguous block and so task 0 is paused until task 1 completes and its resources are freed. In contrast, as shown in FIG. 9, if the method of FIG. 7 is used, the resources for the entirety of task 0 can be allocated from the start because there are resources available and so when the second request is received (following the execution of chunk 0), resources that are sufficient for chunk 1 to execute have already been pre-allocated. However, had resources not been available initially, then a smaller amount (x) would have been allocated to task 0, enabling both task 0 and task 1 to execute in parallel.

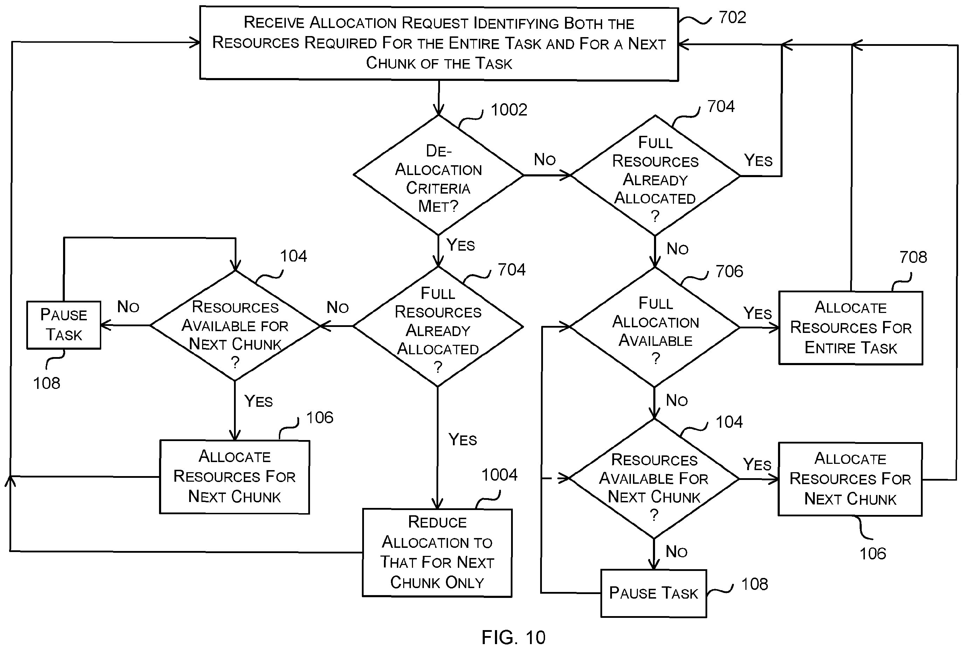

The hybrid method of FIG. 7 may be further modified as shown in FIG. 10 to include two modes of operation ― one mode in which the full allocation of resources is allocated if available (as in FIG. 7) and a second mode in which only the resources for the next chunk are allocated if available (as in FIG. 1 or 6) and where, in various examples, if the full amount of resources have already been allocated, the surplus is released. The switching between these two modes may be implemented based on de-allocation criteria (block 1002), which may be defined in terms of any suitable parameters, such as one or more of: occurrence of deadlock, number of executing tasks, number of paused tasks, priority (or relative priority) of particular tasks (e.g. paused tasks compared to the task requesting resources), etc. If the de-allocation criteria are not met ('No' in block 1002), the method proceeds as in FIG. 7. If, however, the de-allocation criteria are met ('Yes' in block 1002), the method proceeds as in FIG. 1 or 6, with, in various examples, the additional operation of reducing any existing full allocation of resources to only that required for the next task by releasing the excess resources ('Yes' in block 704 followed by block 1004). In other examples, any full allocation may not be reduced (i.e. block 1004 is omitted) and the mode switch may only affect future allocations.

Whilst the method of FIG. 10 does not show partial release of resources (as in FIG. 6) when operating in the second mode, it will be appreciated that the additional method blocks in FIG. 6 (blocks 602-606) may also be incorporated into the second mode of operation in the method of FIG. 10.

In various examples where the method of FIG. 10 is used, the de-allocation criteria may be used to prevent or break deadlock. For example, high priority tasks may be more likely to be allocated according to the first mode of operation (i.e. full allocation if available) whereas low priority tasks (or non-high priority tasks) are more likely to be allocated according to the second mode of operation (i.e. chunk by chunk resource allocation only).

Where the method of FIG. 10 is used, the partitioning of programs (and hence tasks) into chunks may be performed in the same manner as described above with reference to FIG. 3.

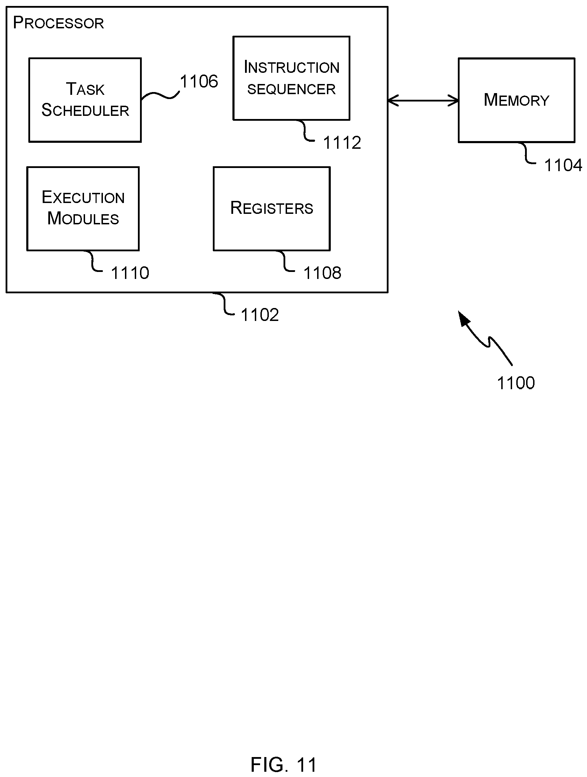

The methods of resource allocation described above may be performed by different parts of a processing system and an example processing system 1100 is shown in FIG. 11. The processing system 1100 comprises a processor 1102 (e.g. a GPU or a CPU) and at least one memory 1104. The requests for resource allocation are received by a task scheduler 1106 and the task scheduler 1106 also performs the resource allocation. The resources that are allocated may comprise one or more registers 1108 within the processor 1102 (e.g. temporary registers and/or shared registers) and/or regions within the memory 1104. The instances of a task are also created by the scheduler 1106 and then executed by the execution modules (or pipelines) 1110. The processing system 1100 may further comprise an instruction sequencer 1112 that feeds instructions to the execution modules 1100. As described above, in examples where the partitioning of the program (and hence the associated tasks) is performed after compilation, the instruction sequencer 1112 may additionally determine when resource thresholds are crossed and inform the scheduler 1106 that a chunk boundary has occurred.

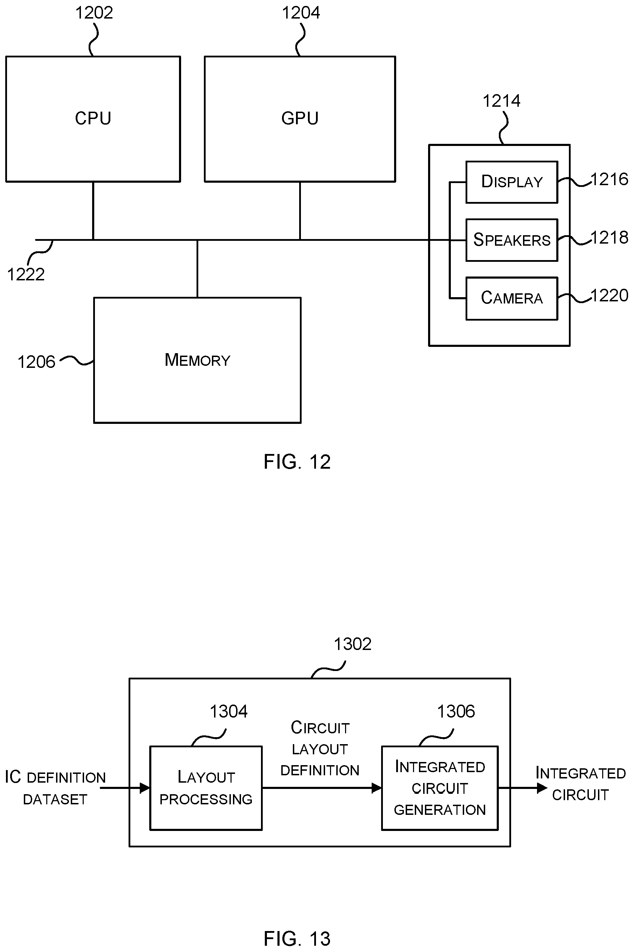

FIG. 12 shows a computer system in which the graphics processing systems described herein may be implemented. The computer system comprises a CPU 1202, a GPU 1204, a memory 1206 and other devices 1214, such as a display 1216, speakers 1218 and a camera 1220. The CPU 1202 and/or GPU 1204 may operate as the processor 1102 in the processing system 1100 as shown in FIG. 11 and described above and the memory 1206 may correspond to the memory 1104 in the processing system 1100. The components of the computer system can communicate with each other via a communications bus 1222.

FIGs. 2, 8 and 9 show the resource allocations for tasks or chunks being defined in multiples of a common unit, x. It will be appreciated that this is by way of example only and in other examples, the thresholds between chunks may be defined in other ways.

The systems of FIGs. 11 and 12 are shown as comprising a number of functional blocks. This is schematic only and is not intended to define a strict division between different logic elements of such entities. Each functional block may be provided in any suitable manner. It is to be understood that intermediate values described herein as being formed by a processing system need not be physically generated by the processing system at any point and may merely represent logical values which conveniently describe the processing performed by the processing system between its input and output.

The processing systems described herein may be embodied in hardware on an integrated circuit. The processing systems described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java™ or OpenCL™. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be any kind of general purpose or dedicated processor, such as a CPU, GPU, System-on-chip, state machine, media processor, an application-specific integrated circuit (ASIC), a programmable logic array, a field-programmable gate array (FPGA), physics processing units (PPUs), radio processing units (RPUs), digital signal processors (DSPs), general purpose processors (e.g. a general purpose GPU), microprocessors, any processing unit which is designed to accelerate tasks outside of a CPU, etc. A computer or computer system may comprise one or more processors. Those skilled in the art will realize that such processing capabilities are incorporated into many different devices and therefore the term 'computer' includes set top boxes, media players, digital radios, PCs, servers, mobile telephones, personal digital assistants and many other devices.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a processor configured to perform any of the methods described herein, or to manufacture a processing system comprising any apparatus described herein. An integrated circuit definition dataset may be, for example, an integrated circuit description.

Therefore, there may be provided a method of manufacturing, at an integrated circuit manufacturing system, a processor as described herein. Furthermore, there may be provided an integrated circuit definition dataset that, when processed in an integrated circuit manufacturing system, causes the method of manufacturing a processor to be performed.

An integrated circuit definition dataset may be in the form of computer code, for example as a netlist, code for configuring a programmable chip, as a hardware description language defining an integrated circuit at any level, including as register transfer level (RTL) code, as high-level circuit representations such as Verilog or VHDL, and as low-level circuit representations such as OASIS (RTM) and GDSII. Higher level representations which logically define an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

An example of processing an integrated circuit definition dataset at an integrated circuit manufacturing system so as to configure the system to manufacture a processor will now be described with respect to FIG. 13.

FIG. 13 shows an example of an integrated circuit (IC) manufacturing system 1302 which is configured to manufacture a processor as described in any of the examples herein. In particular, the IC manufacturing system 1302 comprises a layout processing system 1304 and an integrated circuit generation system 1306. The IC manufacturing system 1302 is configured to receive an IC definition dataset (e.g. defining a processor as described in any of the examples herein), process the IC definition dataset, and generate an IC according to the IC definition dataset (e.g. which embodies a processor as described in any of the examples herein). The processing of the IC definition dataset configures the IC manufacturing system 1302 to manufacture an integrated circuit embodying a processor as described in any of the examples herein.

The layout processing system 1304 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1304 has determined the circuit layout it may output a circuit layout definition to the IC generation system 1306. A circuit layout definition may be, for example, a circuit layout description.

The IC generation system 1306 generates an IC according to the circuit layout definition, as is known in the art. For example, the IC generation system 1306 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1306 may be in the form of computer-readable code which the IC generation system 1306 can use to form a suitable mask for use in generating an IC.

The different processes performed by the IC manufacturing system 1302 may be implemented all in one location, e.g. by one party. Alternatively, the IC manufacturing system 1302 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a processor without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to FIG. 13 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in FIG. 13, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

Those skilled in the art will realize that storage devices utilized to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a DSP, programmable logic array, or the like.

The methods described herein may be performed by a computer configured with software in machine readable form stored on a tangible storage medium e.g. in the form of a computer program comprising computer readable program code for configuring a computer to perform the constituent portions of described methods or in the form of a computer program comprising computer program code means adapted to perform all the steps of any of the methods described herein when the program is run on a computer and where the computer program may be embodied on a computer readable storage medium. Examples of tangible (or non-transitory) storage media include disks, thumb drives, memory cards etc. and do not include propagated signals. The software can be suitable for execution on a parallel processor or a serial processor such that the method steps may be carried out in any suitable order, or simultaneously.

The hardware components described herein may be generated by a non-transitory computer readable storage medium having encoded thereon computer readable program code.

Memories storing machine executable data for use in implementing disclosed aspects can be non-transitory media. Non-transitory media can be volatile or non-volatile. Examples of volatile non-transitory media include semiconductor-based memory, such as SRAM or DRAM. Examples of technologies that can be used to implement non-volatile memory include optical and magnetic memory technologies, flash memory, phase change memory, resistive RAM.

A particular reference to "logic" refers to structure that performs a function or functions. An example of logic includes circuitry that is arranged to perform those function(s). For example, such circuitry may include transistors and/or other hardware elements available in a manufacturing process. Such transistors and/or other elements may be used to form circuitry or structures that implement and/or contain memory, such as registers, flip flops, or latches, logical operators, such as Boolean operations, mathematical operators, such as adders, multipliers, or shifters, and interconnect, by way of example. Such elements may be provided as custom circuits or standard cell libraries, macros, or at other levels of abstraction. Such elements may be interconnected in a specific arrangement. Logic may include circuitry that is fixed function and circuitry can be programmed to perform a function or functions; such programming may be provided from a firmware or software update or control mechanism. Logic identified to perform one function may also include logic that implements a constituent function or sub-process. In an example, hardware logic has circuitry that implements a fixed function operation, or operations, state machine or process.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget."

Any range or device value given herein may be extended or altered without losing the effect sought, as will be apparent to the skilled person.

It will be understood that the benefits and advantages described above may relate to one embodiment or may relate to several embodiments. The embodiments are not limited to those that solve any or all of the stated problems or those that have any or all of the stated benefits and advantages.

Any reference to 'an' item refers to one or more of those items. The term 'comprising' is used herein to mean including the method blocks or elements identified, but that such blocks or elements do not comprise an exclusive list and an apparatus may contain additional blocks or elements and a method may contain additional operations or elements. Furthermore, the blocks, elements and operations are themselves not impliedly closed.

The steps of the methods described herein may be carried out in any suitable order, or simultaneously where appropriate. The arrows between boxes in the figures show one example sequence of method steps but are not intended to exclude other sequences or the performance of multiple steps in parallel. Additionally, individual blocks may be deleted from any of the methods without departing from the spirit and scope of the subject matter described herein. Aspects of any of the examples described above may be combined with aspects of any of the other examples described to form further examples without losing the effect sought. Where elements of the figures are shown connected by arrows, it will be appreciated that these arrows show just one example flow of communications (including data and control messages) between elements. The flow between elements may be in either direction or in both directions.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

1. A method of allocating resource to a task in a parallel processing system, the task comprising a group of data-items and a program, wherein the data-items are to be processed according to the program, and the method comprising:
receiving a request to allocate resources to a task, the request identifying an amount of resources required to execute a next chunk of the task only (102) and wherein the task is partitioned into a plurality of chunks based on changes in resource requirements over time and wherein a chunk relates to a portion of the program that the task executes;
determining whether the amount of resources required to execute the next chunk of the task is available (104);
in response to determining that the amount of resources required to execute the next chunk of the task is not available, pausing the task (108); and
in response to determining that the amount of resources required to execute the next chunk of the task is available, allocating the resources to the task (106).

2. The method according to claim 1, wherein determining whether the amount of resources required to execute the next chunk of the task is available comprises:
determining whether a contiguous block of resources comprising the amount of resources required to execute the next chunk of the task is available.

3. The method according to any of the preceding claims, further comprising:
releasing any resources already allocated to the task that are not required to execute the next chunk of the task (602-604).

4. The method according to any of the preceding claims, wherein the request received by the task scheduler also identifies an amount of resources required to execute the entire task (702); and wherein the method further comprises, after receiving the request:
determining whether the amount of resources required to execute the entire task has already been allocated to the task (704); and
in response to determining that the amount of resources required to execute the entire task has not already been allocated to the task:
determining whether the amount of resources required to execute the entire task is available (706); and
in response to determining that the amount of resources required to execute the entire task is available, allocating the resources to the task (708);
and wherein the method proceeds to determine whether the amount of resources required to execute the next chunk of the task is available only in response to determining that the amount of resources required to execute the entire task is not available.

5. The method according to any of the preceding claims, wherein the request received by the task scheduler also identifies an amount of resources required to execute the entire task (702); and the task scheduler has two modes of operation, wherein the method comprises:
in a first mode of operation the method further comprises, after receiving the request:
determining whether the amount of resources required to execute the entire task has already been allocated to the task (704); and
in response to determining that the amount of resources required to execute the entire task has not already been allocated to the task:
determining whether the amount of resources required to execute the entire task is available (706); and
in response to determining that the amount of resources required to execute the entire task is available, allocating the resources to the task (708);
and wherein the method proceeds to determine whether the amount of resources required to execute the next chunk of the task is available only in response to determining that the amount of resources required to execute the entire task is not available;
and in a second mode of operation, the method further comprises, after receiving the request:
determining whether the amount of resources required to execute the entire task has already been allocated to the task (704); and
in response to determining that the amount of resources required to execute the entire task has already been allocated to the task, reducing the allocation of resources to the task to the amount of resources required to execute the next chunk of the task (1004);
and wherein the method proceeds to determine whether the amount of resources required to execute the next chunk is available only in response to determining that the amount of resources required to execute the entire task has not already been allocated to the task.

6. The method according to any of the preceding claims, further comprising repeating the method for each of a plurality of tasks in the parallel processing system.

7. The method according to any of the preceding claims, wherein the parallel processing system comprises a GPU and the task is associated with a shader.

8. The method according to any of the preceding claims, wherein the resources comprise registers.

9. A parallel processing system (1102) comprising:
one or more resources (1104, 1108) for use when executing a task, the task comprising a group of data-items and a program, wherein the data-items are to be processed according to the program, and wherein the task is partitioned into a plurality of chunks based on changes in resource requirements over time and wherein a chunk relates to a portion of the program that the task executes;
a task scheduler (1106) arranged to receive a request to allocate resources to a task, the request identifying an amount of resources required to execute a next chunk of the task only, determine whether the amount of resources required to execute the next chunk of the task is available, in response to determining that the amount of resources required to execute the next chunk of the task is not available, pause the task, and in response to determining that the amount of resources required to execute the next chunk of the task is available, allocate the resources to the task; and
one or more execution modules (1110) arranged to execute each chunk of the task.

10. The parallel processing system according to claim 9, wherein the task scheduler is arranged to determine whether the amount of resources required to execute the next chunk of the task is available by:
determining whether a contiguous block of resources comprising the amount of resources required to execute the next chunk of the task is available.

11. The parallel processing system according to claim 9 or 10, wherein the task scheduler is further arranged to:
release any resources already allocated to the task that are not required to execute the next chunk of the task.

12. The parallel processing system according to any of claims 9-11, wherein the request received by the task scheduler also identifies an amount of resources required to execute the entire task;
and wherein the task scheduler is further arranged, after receiving the request, to determine whether the amount of resources required to execute the entire task has already been allocated to the task; and in response to determining that the amount of resources required to execute the entire task has not already been allocated to the task: determine whether the amount of resources required to execute the entire task is available; and in response to determining that the amount of resources required to execute the entire task is available, allocate the resources to the task; and wherein the task scheduler is further arranged to determine whether the amount of resources required to execute the next chunk of the task is available only in response to determining that the amount of resources required to execute the entire task is not available.

13. The parallel processing system according to any of claims 9-11, wherein the request received by the task scheduler also identifies an amount of resources required to execute the entire task;
and wherein the task scheduler has two modes of operation,
wherein in a first mode of operation the task scheduler is arranged, after receiving the request, to determine whether the amount of resources required to execute the entire task has already been allocated to the task; and in response to determining that the amount of resources required to execute the entire task has not already been allocated to the task: to determine whether the amount of resources required to execute the entire task is available; and in response to determining that the amount of resources required to execute the entire task is available, to allocate the resources to the task; and wherein the task scheduler is further arranged to determine whether the amount of resources required to execute the next chunk of the task is available only in response to determining that the amount of resources required to execute the entire task is not available; and
wherein in a second mode of operation, the task scheduler is arranged, after receiving the request, to determine whether the amount of resources required to execute the entire task has already been allocated to the task; in response to determining that the amount of resources required to execute the entire task has already been allocated to the task, to reduce the allocation of resources to the task to the amount of resources required to execute the next chunk of the task; and wherein the task scheduler proceeds to determine whether the amount of resources required to execute the next chunk of the task is available only in response to determining that the amount of resources required to execute the entire task has not already been allocated to the task.

14. The parallel processing system of any of claims 9-13, further comprising an instruction sequencer, wherein the instruction sequencer is arranged to access metadata associated with a program associated with the task, monitor execution of the program and identify, using the metadata, when execution of the program has reached an instruction in the program where the resource requirements increase above a threshold for a first time in the program execution sequence, identifying a chunk boundary, wherein the metadata associated with the program identifies one or more instructions in the program and resource requirements associated with those instructions.

15. Computer readable code configured to cause the method of any of claims 1-8 to be performed when the code is run.
